# FASCICULE DE BREVET EUROPEEN

(11) **EP 1 827 749 B1**
(45) Date de publication et mention de la délivrance du brevet: **25.02.2009**
(21) Numéro de dépôt: 05847766.2
(22) Date de dépôt: 16.12.2005
(51) Int. Cl.: B23K 20/02, F28D 1/03

(54) **PROCEDE DE REALISATION D'UN ELEMENT COMPORTANT DES CANAUX DE CIRCULATION DE FLUIDE**
VERFAHREN ZUR HERSTELLUNG EINES FLUIDZIRKULATIONSKANÄLE UMFASSENDEN ELEMENTS
METHOD FOR PRODUCTION OF AN ELEMENT COMPRISING FLUID CIRCULATION CHANNELS

(30) Priorité: 21.12.2004 FR 0453121
(43) Date de publication de la demande: 05.09.2007
(73) Titulaire: COMMISSARIAT A L'ENERGIE ATOMIQUE, 75015 Paris (FR)
(72) Inventeur: RIGAL, Emmanuel, F-38950 Saint Martin Le Vinoux (FR); DE DINECHIN, Guillaume, F-92130 Issy Les Moulineaux (FR); BUCCI, Philippe, F-38360 Engins (FR); AUBERT, Philippe, F-75016 Paris (FR)
(74) Mandataire: Poulin, Gérard
(86) Numéro de dépôt international: PCT/FR2005/051094
(87) Numéro de publication internationale: WO 2006/067349

(56) Documents cités:
- FR-A- 2 850 741

## Description

L'invention concerne un procédé de réalisation d'un élément comportant des canaux de circulation de fluide destiné notamment, mais non exclusivement, à l'échange de chaleur entre deux fluides.

Pour réaliser des canaux de refroidissement dans des structures, on fait appel soit à diverses techniques d'usinage, soit à l'assemblage de pièces élémentaires. Les structures que l'on peut obtenir directement par usinage sont très limitées à la fois en termes de section de passage de fluide réfrigérant et de géométries de circuits. Ainsi, on est généralement amené à assembler des pièces élémentaires simples. De nombreuses techniques d'assemblages peuvent être utilisées, notamment le brasage, le soudage par fusion à l'aide de différentes sources d'énergie (arc électrique, faisceaux de haute énergie) et le soudage par diffusion. Le soudage par diffusion consiste à appliquer, à haute température et pendant un temps donné, une force sur les surfaces à assembler. On établit la continuité de la matière entre les pièces, par élimination des jeux et des porosités sous l'effet combiné de la température et de la force. Cette technique permet d'obtenir des géométries particulièrement complexes lorsqu'elle est mise en oeuvre par Compression Isostatique à Chaud, ou CIC (c'est-à-dire que la force est obtenue par une pression de gaz). Le soudage diffusion par CIC permet de reconstituer des structures monolithiques à partir d'une grande variété d'éléments tels que des tôles, des plaques, des coques, des tubes cintrés ou non. A l'inverse des autres techniques précitées, il peut être mis en oeuvre pour assembler de grandes surfaces complexes, sans métal d'apport. On évite ainsi les problèmes associés à la présence de matériaux à bas point de fusion (limitation de la température d'utilisation, faible résistance des joints brasés) et à la présence de soudure traversant les parois (risques de fuites). Les jonctions obtenues par soudage diffusion sont connues pour être particulièrement résistantes.

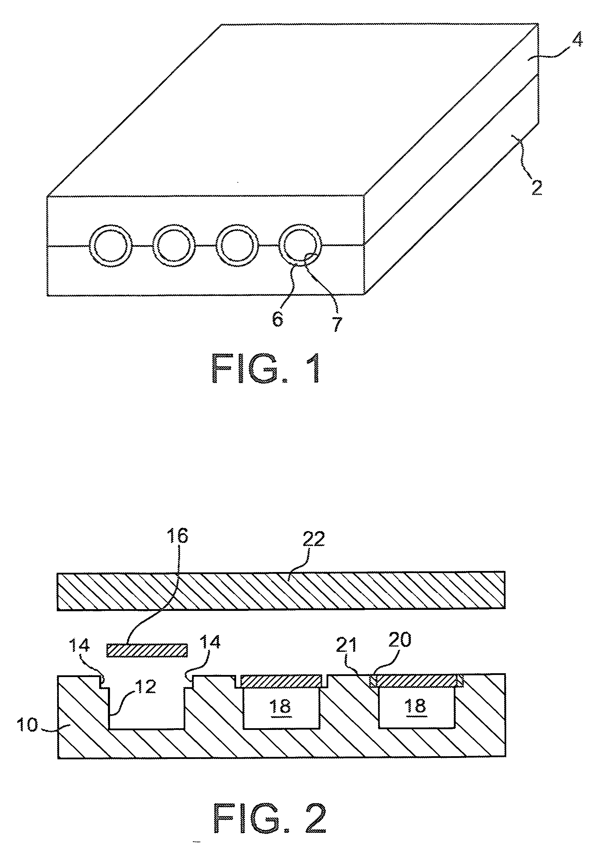

Un cas souvent rencontré est celui de plaques ou de coques devant présenter un ou plusieurs circuits de refroidissement internes. Une solution pour réaliser ce type de structure est d'insérer des tubes 6 ayant la géométrie de canal désirée entre deux plaques rainurées 2,4 (figure 1)[1]. Les rainures 7 ayant la géométrie des tubes, l'empilement des pièces permet de reconstituer la géométrie finale. L'assemblage par soudage diffusion est réalisé de la façon suivante : les surfaces à assembler sont nettoyées, les pièces empilées, la périphérie des plaques et des tubes soudée de façon étanche, l'interface est dégazée et l'empilement est soumis à un cycle de CIC dont les paramètres (temps, température pression) dépendent de la nature du ou des matériau(x) métalliques. Pendant ce cycle de CIC, la pression de gaz ne peut pas pénétrer dans les interfaces et les pièces se soudent. Les tubes étant soumis à la même pression que les surfaces extérieures, ils ne sont pas écrasés par celle-ci.

Une limite importante de la technique décrite au paragraphe précédent apparaît dans le cas de structures comportant des canaux de section telle que les tubes correspondant n'existent pas dans le commerce ou que les canaux comportent des coudes irréalisables par cintrage des tubes. On ne peut alors pas utiliser de tubes. L'assemblage par soudage diffusion en CIC des plaques rainurées sans tubes insérés n'est possible qu'au prix d'une dégradation importante de la structure. En effet, si on ne bouche pas de façon étanche les entrées et sorties des canaux, le gaz de pressurisation pénètre entre les plaques et il n'y a pas soudage. A l'inverse, si on bouche de façon étanche les entrées et sorties des canaux, ceux-ci sont écrasés par la pression et il en résulte une perte inacceptable de précision dimensionnelle voire une disparition des canaux. Diminuer la pression diminue l'écrasement mais ceci se fait au prix d'une réduction de la résistance de la jonction plaque/plaque. Une autre solution serait de remplir les rainures avec des noyaux réalisés dans un matériau susceptible d'être éliminé après l'assemblage par dissolution chimique ou par un autre moyen. De cette façon on évite l'écrasement des canaux. Dans la pratique l'élimination du matériau de remplissage est très difficile.

On connaît par ailleurs (FR 2 850 741) un procédé de fabrication d'un panneau de refroidissement actif. Selon ce procédé, on réalise une première pièce en matériau composite thermostructural ayant une face intérieure présentant des reliefs en creux formant des canaux ; on forme un revêtement métallique sur cette face ; on réalise une deuxième pièce en un matériau composite thermostructural ayant une face intérieure destinée à être appliquée sur la face intérieure de la première pièce ; on forme un revêtement métallique sur la face intérieure de la deuxième pièce ; on assemble les deux pièces par pression à chaud de manière à obtenir un panneau de refroidissement à canaux de circulation intégrés.

Dans ce procédé, les pièces en matériaux composite sont insérées dans une enveloppe étanche. Le gaz de pressurisation ne peut pas pénétrer dans les canaux. Cette solution est possible parce que les matériaux composites gardent, à la température de sondage, une rigidité suffisamment élevée pour éviter l'écrasement des canaux. L'application de cette solution aux matériaux métalliques, sans revêtement métallique intermédiaire n'est pas possible car, à la température de soudage, ceux-ci se déformeraient.

Or, la présence dans le composant d'un second matériau n'est souvent pas souhaitable car elle complique son dimensionnement, par exemple sa tenue à la pression. Elle nécessite des développements considérables pour qualifier le composant vis-à-vis de son utilisation.

D'autre part, on perd un des avantages du soudage par diffusion, à savoir que les performances mécaniques des jonctions peuvent être très proches de celles du matériau de base si les précautions nécessaires sont prises (préparation de surface et paramètres de soudage adéquats).

La présente invention a pour objet un procédé de réalisation d'un élément comportant des canaux de circulation de fluide, notamment un élément d'échangeur de chaleur, qui remédie à ces inconvénients. Ce procédé doit permettre l'obtention de structures refroidies par des canaux internes non assimilables à des tubes cintrés.

Ces buts sont atteints conformément à l'invention, par le fait qu'on réalise des rainures dans au moins une face d'une plaque de base ; qu'on obture, de préférence par soudage, les sommets des rainures de manière étanche au moyen de lames ; qu'on soude un couvercle par diffusion en compression isostatique à chaud sur la face de plaque de base comportant les rainures, par-dessus les lames.

De préférence, les lames sont soudées sur la plaque de base, notamment par soudage laser.

Grâce au soudage, on élimine l'utilisation de brasure. La température maximale à laquelle l'élément peut être utilisé est donc augmentée. Le soudage laser permet de plus une accessibilité aux pièces de petites dimensions.

Les soudures ne traversent pas l'ensemble des parois puisque ces soudures sont utilisées uniquement pour la liaison des lames sur la plaque de base.

Le soudage par diffusion ne nécessite pas l'utilisation de tubes et ne produit aucune déformation des canaux, même s'ils sont de petite section. En outre, la section transversale de ces canaux peut varier selon leur longueur, ce qui n'est pas le cas dans un procédé de l'art antérieur dans lequel on utilise des tubes. Enfin, d'éventuels défauts (manque de pénétration par exemple) des cordons de soudure des lames sur la plaque de base sont sans conséquence étant donné que cette plaque de base est recouverte par un couvercle qui réalise une deuxième paroi pour une meilleure tenue mécanique.

Avantageusement, on réalise des emboîtements dans les rainures préalablement à leur obturation au moyen des lames. La portée de ces emboîtements est de préférence comprise 0,1mm et 0,6mm, et leur profondeur entre 0,5mm et 1mm. De préférence, le jeu entre les faces de l'emboîtement et les lames introduites dans ces emboîtements ne dépasse pas 0,1mm.

Dans une réalisation particulière, après l'étape de soudage par diffusion du couvercle sur la plaque de base, on usine la plaque de base et/ou le couvercle afin de réduire l'épaisseur de l'élément.

Cette réalisation est particulièrement adaptée au cas où l'on souhaite réaliser des éléments de faible épaisseur.

Dans une réalisation particulière on peut également former des rainures dans chacune des deux faces de la plaque de base. On réalise ainsi un élément comportant une plaque de base prise en sandwich entre deux couvercles. Cette réalisation permet une structure compacte. Dans une autre réalisation particulière, on réalise en outre des rainures dans le couvercle de telle manière qu'il constitue lui-même une plaque de base.

Ce couvercle peut être fermé par un couvercle sans rainures ou éventuellement par un nouveau couvercle comportant lui-même des rainures.

D'autres caractéristiques et avantages de l'invention apparaîtront encore à la lecture de la description qui suit d'exemples de réalisation donnés à titre illustratif en référence aux figures annexées. Sur ces figures :
- la figure 1, déjà décrite, est une vue en perspective d'une plaque réalisée conformément l'art antérieur ;
- la figure 2 est une vue schématique en coupe illustrant les différentes étapes du procédé de l'invention ;
- la figure 3 est une vue en perspective d'une plaque d'échangeur de chaleur réalisée conformément à l'invention ;
- la figure 4 est une vue en coupe de la plaque de la figure 3 en cours de réalisation ;
- la figure 5 est une vue en coupe de cette plaque terminée ;
- les figures 6 et 7 sont deux vues en coupe d'un échangeur de chaleur utilisant des plaques de l'invention, par exemple les plaques des figures 3 à 5 ;
- la figure 8 est une vue en perspective d'un échangeur de chaleur compact comportant des plaques réalisées conformément à l'invention ;
- la figure 9 est une vue en perspective d'une plaque de refroidissement d'un module de couverture d'un réacteur à fusion thermonucléaire ;
- les figures 10, 11, 12 représentent trois étapes de réalisation du module de couverture de réacteur à fusion thermonucléaire de la figure 9 ;
- les figures 13 et 14 illustrent deux variantes de réalisation d'un élément comportant des canaux de circulation de fluide conforme à l'invention.

Conformément à la figure 2, on usine dans un premier temps des rainures 12 dans la plaque de base 10. Chaque rainure 12 débouche au moins à l'une de ses extrémités. Les rainures parcourent la plaque de base selon les directions imposées par le dessin de la structure refroidie. Elles peuvent être de section et de cheminement très variés. Elles peuvent notamment présenter une section rectangulaire, polygonale, semi-circulaire. Elles peuvent également présenter une section qui varie selon leur longueur. Leur cheminement peut être droit ou non. Il peut présenter des aller et retour et/ou des virages serrés que l'on ne pourrait pas réaliser en utilisant des tubes cintrés conformément à l'art antérieur représenté sur la figure 1.

Différents procédés d'usinage peuvent être retenus en fonction de la géométrie des rainures. On peut utiliser par exemple le fraisage à l'aide de fraises-scie, de fraises-boule, l'usinage à grande vitesse, l'usinage chimique, l'usinage électrochimique ou l'enfonçage.

De préférence, les rainures présentent deux emboîtements 14 destinés à recevoir une lame 16 qui obture la rainure. Dans un exemple de réalisation, la portée des emboîtements est comprise entre 0,1mm et 0,6mm et leur profondeur entre 0,5mm et 1mm. La largeur de l'emboîtement est ajustée de façon à ce que le jeu de la lame 16 soit au plus de 0,1mm. L'épaisseur des lames 16 est sensiblement égale à la profondeur de l'emboîtement, soit de 0,5 à 1mm.

Les lames 16 peuvent être obtenues par découpe mécanique, par découpe laser ou par tout autre moyen adapté à partir de tôles ou d'une autre forme de produits semi-finis.

Après avoir positionné les lames 16 dans les emboîtements 14, on les soude sur la plaque de base 10 par exemple par soudage laser YAG ou CO₂ de façon à constituer des canaux fermés 18. Habituellement, deux cordons de soudure 20 sont nécessaires pour chaque lame 16. En d'autres termes, il faut un cordon de soudure pour chacun des emboîtements 14. Toutefois, dans le cas d'une structure dans laquelle les canaux de refroidissement 18 sont très rapprochés les uns des autres, un seul cordon de soudure peut être suffisant pour obtenir simultanément l'étanchéité de l'emboîtement situé à la droite d'une lame et de l'emboîtement situé à la gauche de la lame adjacente.

Les conditions de soudage peuvent être définies de façon à obtenir des soudures débouchantes dans les rainures. Avantageusement, on réalise un contrôle non destructif de type radiographie aux rayons X pour vérifier l'absence de défaut rédhibitoire dans les cordons de soudure et, le cas échéant, vérifier que la soudure est bien pénétrée. L'étanchéité de chaque canal de la plaque 10 peut également être contrôlée par un test d'étanchéité à l'hélium. Les surfaces à assembler par soudage par diffusion sont ensuite nettoyées et prétraitées (par exemple par décapage chimique ou usinage léger) afin d'obtenir une surface propre.

On procède ensuite au soudage par diffusion par CIC (compression isostatique à chaud) du couvercle 22 sur la face 21 de la plaque de base 2 dans laquelle les rainures 12 ont été réalisées.

La face supérieure de la base et la face supérieure des lames forment une première surface sur laquelle on pose le couvercle. La face du couvercle en vis-à-vis de cette première surface constitue une deuxième surface. Ces deux surfaces constituent l'interface à souder par diffusion. La périphérie de l'interface est soudée de façon étanche et dégazée.

L'étanchéification des rainures 12 au moyen des lames 16 soudées par un procédé laser rend possible le soudage par diffusion en CIC sans déformation significative des canaux 18, ceux-ci étant ouverts à au moins l'une de leurs extrémités. Le soudage par diffusion en CIC permet d'augmenter l'épaisseur de paroi jusqu'à une valeur désirée simplement en jouant sur l'épaisseur du couvercle 22. Non seulement il ne serait pas possible d'obtenir cette épaisseur directement par soudage laser, mais en outre la présence du couvercle permet d'isoler les cordons de soudure 20 du milieu extérieur et ainsi de diminuer les risque de fuite pendant le fonctionnement en service.

Pour les aciers et les alliages de nickel, la température de soudage est choisie typiquement entre 1000°C et 1250°C et la pression typiquement entre 800 bar et 1500 bar. Le temps de soudage est typiquement au minimum de deux heures et au maximum de dix heures.

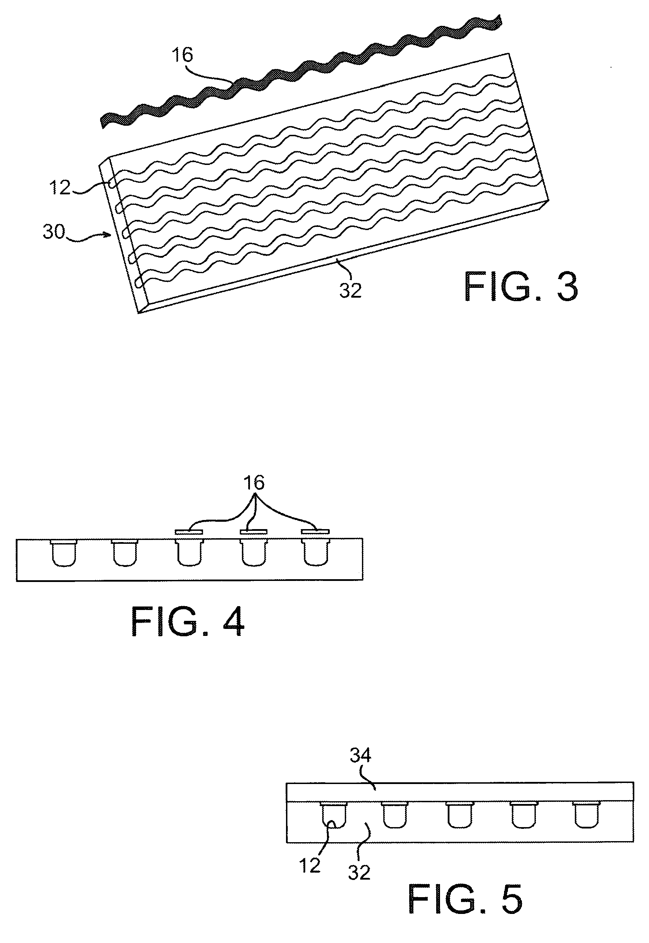

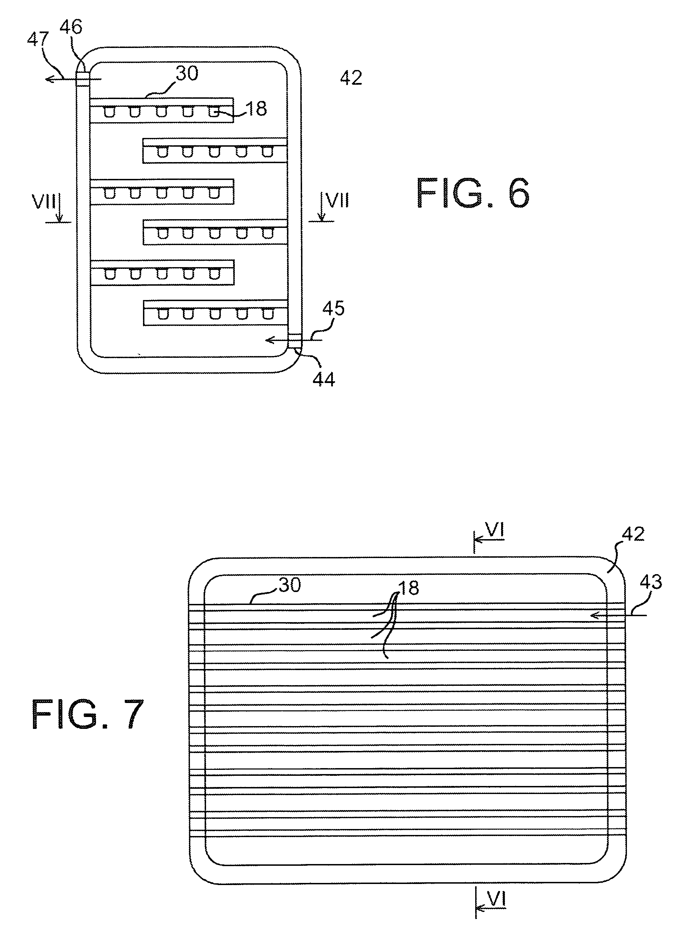

On a représenté sur les figures 3 à 5 un exemple de réalisation d'une plaque 30 d'échange de chaleur conformément au procédé de l'invention. Des rainures 12 présentant une forme ondulée 5 sont formées selon la longueur de la plaque de base 32 qui présente la forme d'un parallélépipède rectangle de faible épaisseur. Comme expliqué précédemment, on réalise des lames dont la forme est adaptée à celle des rainures 12. En l'occurrence, dans l'exemple, les lames 16 présentent une forme ondulée. La figure 4 montre l'insertion des lames dans les emboîtements des rainures 12. La figure 5 est une vue en coupe transversale de la plaque 30 après soudage par diffusion par CIC du couvercle 34. La plaque 30 de la figure 3 peut être utilisée dans un grand nombre de type d'échangeurs de chaleur. Les figures 6 et 7 représentent un exemple. La figure 7 est une vue en coupe selon le plan VII-VII de la figure 6. L'échangeur de chaleur représenté en coupe sur la figure 6 comporte une calandre 42 réalisée par exemple en tôle d'acier pliée et soudée. Des plaques d'échangeur de chaleur 30 sont disposées horizontalement à l'intérieur de la calandre 42. Un premier fluide caloporteur circule à l'intérieur des canaux 18 de chacune de ces plaques (flèches 43, figure 7). Un second fluide caloporteur circule dans la calandre en relation d'échange de chaleur avec le premier fluide. Le second fluide pénètre par une ouverture d'entrée 44 située à la partie inférieure droite de la calandre (selon la figure 6) comme le montre la flèche 45 et après avoir emprunté un parcours sinueux dans lequel il circule au contact des surfaces des plaques 30, il ressort de l'échangeur par l'orifice de sortie 46, comme schématisé par la flèche 47.

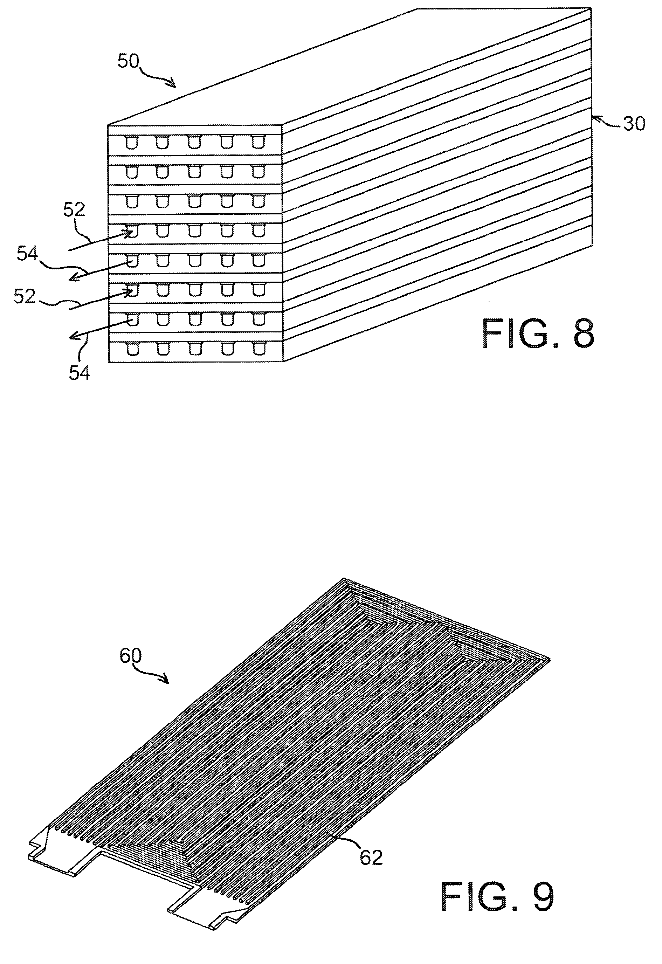

On a représenté sur la figure 8 une autre réalisation d'un échangeur de chaleur obtenu avec des plaques telles que les plaques 30 représentées sur la figure 3. Cet échangeur est constitué simplement de plaques 30 superposées, huit dans l'exemple. Un premier fluide circule dans quatre de ces plaques, comme schématisé par la flèche 52 et un second fluide circule dans quatre autres de ces plaques comme schématisé par les flèches 54. Les plaques dans lesquelles le premier fluide circule alternent avec les plaques dans lesquelles le second fluide circule. La circulation de ces fluides s'effectue à contre courant. On réalise ainsi un échangeur de chaleur compact. La réalisation des alimentations en fluide, et des sorties, sont faites de façon connue.

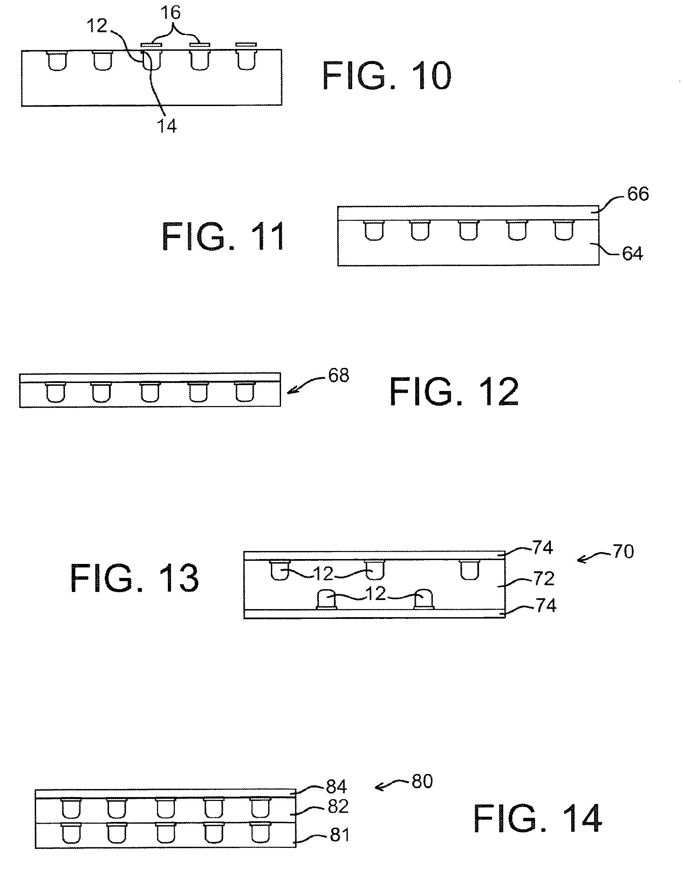

On a représenté sur la figure 9 une vue en perspective d'un composant de réacteur à fusion thermonucléaire de faible épaisseur (6,5mm) dans lequel sont réalisés des circuits de refroidissement, de section carrée, de 4mmx4,5mm dans l'exemple. Ces circuits de refroidissement sont complexes et ils ne peuvent pas être réalisés par un simple usinage selon le procédé décrit en référence à la figure 1. En outre, il est requis pour ces composants une étanchéité parfaite du circuit de refroidissement, étanchéité qui ne peut être garantie en simple soudage par diffusion en compression isostatique à chaud ainsi qu'il est expliqué dans l'introduction. Ainsi, conformément à une variante particulière de l'invention, on usine dans des plaque relativement épaisses, par exemple de 15mm d'épaisseur, des rainures présentant des sections désirées, une section carrée de 4mmx4,5mm dans l'exemple, avec des emboîtement de portée comprise entre 0,2mm et 0,6mm et une profondeur comprise entre 0,5mm et 1mm. On soude ensuite des lames 16 présentant une épaisseur et une forme adaptées à la géométrie des circuits de refroidissement avec un procédé de soudage par laser (figure 10). On rapporte ensuite un couvercle 66 par compression isostatique à chaud (figure 11). On usine ensuite le composant ainsi obtenu pour lui donner l'épaisseur spécifiée, c'est-à-dire 6,5mm dans l'exemple (figure 12). Comme on peut le constater par la comparaison des figures 11 et 12, la réduction de l'épaisseur se fait à la fois par un usinage du couvercle 66 et de la plaque de base 64.

Dans une réalisation particulière (figure 13) un élément 70 comportant des canaux de circulation de fluide conformément à l'invention peut être réalisé en usinant des rainures dans chacune des faces d'une plaque de base 72. Un couvercle 74 est ensuite associé à chacune de ces faces comme décrit précédemment.

Dans une autre réalisation particulière (figure 14), un élément 80 conforme à l'invention peut être réalisé en utilisant un couvercle 82 assemblé par soudage de diffusion CIC sur une plaque de base 81, le couvercle 82 comportant lui-même des rainures 12. De la sorte, le couvercle 82 constitue lui-même une plaque de base vis-à-vis d'un couvercle 84. On réalise ainsi un élément compact.

Dans les exemples décrits, les plaques sont planes. Toutefois il est bien entendu que les plaques peuvent aussi présenter un rayon de courbure (portion de cylindre, forme de tôle ondulée, etc). Il est seulement nécessaire que la plaque et le couvercle présentent les mêmes rayons de courbure pour pouvoir s'emboîter sans jeu.

### Références

[1] Fusion reactor first wall fabrication techniques ; G. Le Marois, E. Rigal, P. Bucci, Fusion Engineering and Design 61-62 (2002) 103-110- Elsevier Science B.V.

## Revendications

1. Procédé de réalisation d'un élément comportant des canaux de circulation de fluide, **caractérisé en ce que** :
- on réalise des rainures (12) dans au moins une face (21) d'une plaque de base (10) ;
- on obture les sommets des rainures (12) de manière étanche au moyen de lames (16) ;
- on soude un couvercle (22) par diffusion en compression isostatique à chaud sur la face (21) de la plaque de base (10) comportant les rainures (12), par-dessus les lames (16.

2. Procédé selon la revendication 1, **caractérisé en ce que** l'obturation des rainures (12) au moyen des lames (16) est obtenue par soudage.

3. Procédé selon la revendication 2, dans lequel les lames (16) sont soudées sur la plaque de base (10) par soudage laser.

4. Procédé selon l'une des revendications 1 à 3, dans lequel on réalise des emboîtements (14) dans les rainures (12) préalablement à leur obturation au moyen des lames (16).

5. Procédé selon la revendication 4, **caractérisé en ce que** la portée des emboîtements (14) est comprise entre 0,1mm et 0,6mm.

6. Procédé selon l'une des revendications 4 ou 5, dans lequel la profondeur des emboîtements (14) est comprise entre 0,5mm et 1mm.

7. Procédé selon l'une des revendications 3 à 6, dans lequel le jeu entre l'emboîtement (14) et la lame (16) insérée dans cet emboîtement (14) est inférieur 0,1mm.

8. Procédé selon l'une des revendications 1 à 7, **caractérisé en ce que**, après l'étape de soudage du couvercle (22) par diffusion en compression isostatique à chaud, on usine la plaque de base (10) et/ou le couvercle (22) afin de réduire l'épaisseur de l'élément.

9. Procédé selon l'une des revendications 1 à 8, **caractérisé en ce que** l'on réalise des rainures (12) dans chacune des deux faces d'une plaque de base (72) .

10. Procédé selon l'une des revendications 1 à 9, **caractérisé en ce qu'**on réalise des rainures (16) dans le couvercle (82) de manière à ce qu'il constitue lui-même une plaque de base.

## Claims

1. A method for making a component including fluid flow channels, **characterized in that**:
- grooves (12) are made in at least one face (21) of a base plate (10);
- the tops of the grooves (12) are sealably blocked by means of strips (16);
- a lid (22) is diffusion-welded with hot isostatic compression on the face (21) of the base plate (10) including the grooves (12), above the strips (16).

2. The method according to claim 1, **characterized in that** blocking of the grooves (12) by means of the strips (16) is obtained by welding.

3. The method according to claim 2, wherein the strips (16) are welded on the base plate (10) by laser welding.

4. The method according to any of claims 1 to 3, wherein fittings (14) are made in the grooves (12) before their blocking by means of the strips (16).

5. The method according to claim 4, **characterized in that** the span of the fittings (14) is between 0.1mm and 0.6mm.

6. The method according to any of claims 4 or 5, wherein the depth of the fittings (14) is between 0.5mm and 1mm.

7. The method according to any of claims 3 to 6, wherein the play between the fitting (14) and the strip (16) inserted into this fitting (14) is less than 0.1mm.

8. The method according to any of claims 1 to 7, **characterized in that**, after the step for diffusion-welding the lid (22) with hot isostatic compression, the base plate (10) and/or the lid (22) are machined in order to reduce the thickness of the component.

9. The method according to any of claims 1 to 8, **characterized in that** grooves (12) are made in each of the two faces of a base plate (72).

10. The method according to any of claims 1 to 9, **characterized in that** grooves (16) are made in the lid (82) so that it itself forms a base plate.

## Patentansprüche

1. Verfahren zur Herstellung eines Fluidzirkulationskanäle umfassenden Elements,
**dadurch gekennzeichnet**, das:
- man auf wenigstens einer Seite (21) einer Basisplatte (10) Nuten (12) realisiert;
- man die Nuten (12) an ihrer Oberseite mit Lamellen (16) dicht verschließt;
- man auf die Seite (21) der die Nuten (12) enthaltenden Basisplatte (10) über den Lamellen (16) durch heiß-isostatische Druckdiffusion einen Deckel (22) schweißt.

2. Verfahren nach Anspruch 1, **dadurch gekennzeichnet, dass** das Verschließen der Nuten (12) mit Lamellen (16) durch Schweißen erfolgt.

3. Verfahren nach Anspruch 2, bei dem die Lamellen (16) durch Laserschweißung auf die Basisplatte (10) geschweißt werden.

4. Verfahren nach einem der Ansprüche 1 bis 3, bei dem man vor dem Verschließen der Nuten (12) durch Lamellen (16) in den Nuten Falze (14) realisiert.

5. Verfahren nach Anspruch 4, **dadurch gekennzeichnet, dass** die Auflagebreite der Falze (14) zwischen 0,1 mm und 0,6 mm enthalten ist.

6. Verfahren nach einem der Ansprüche 4 oder 5, bei dem die Tiefe der Falze (14) zwischen 0,5 mm und 1 mm enthalten ist.

7. Verfahren nach einem der Ansprüche 3 bis 6, bei dem das Spiel zwischen dem Falz (14) und der in diesen Falz (14) eingesetzten Lamelle (16) kleiner als 0,1 mm ist.

8. Verfahren nach einem der Ansprüche 1 bis 7, **dadurch gekennzeichnet, dass** man nach dem Schritt zum Festschweißen des Deckels (22) durch heiß-isostatische Druckdiffusion die Basisplatte (10) und/oder den Deckel (22) bearbeitet, um die Dicke des Elements zu reduzieren.

9. Verfahren nach einem der Ansprüche 1 bis 8, **dadurch gekennzeichnet, dass** man in jeder der beiden Seiten einer Basisplatte (72) Nuten (12) realisiert.

10. Verfahren nach einem der Ansprüche 1 bis 8, **dadurch gekennzeichnet, dass** man in dem Deckel (82) Nuten (16) realisiert, so dass er selbst eine Basisplatte bildet.
